(19) Europäisches Patentamt
European Patent Office
Office européen des brevets

(11) EP 0 789 790 B1

(12) EUROPÄISCHE PATENTSCHRIFT

(45) Veröffentlichungstag und Bekanntmachung des Hinweises auf die Patenterteilung:
**20.01.1999 Patentblatt 1999/03**

(51) Int Cl.[6]: **D01F 2/00**, C08J 5/18, C08L 1/02 // C08L1:02

(21) Anmeldenummer: **95936420.9**

(22) Anmeldetag: **31.10.1995**

(86) Internationale Anmeldenummer:
**PCT/DE95/01535**

(87) Internationale Veröffentlichungsnummer:
**WO 96/14451 (17.05.1996 Gazette 1996/22)**

(54) **FORMKÖRPER AUS REGENERIERTER CELLULOSE UND VERFAHREN ZU SEINER HERSTELLUNG**

REGENERATED CELLULOSE MOULDING AND PROCESS FOR PRODUCING IT

CORPS DE MOULAGE EN CELLULOSE REGENEREE ET SON PROCEDE DE PRODUCTION

(84) Benannte Vertragsstaaten:
**AT DE ES GB NL SE**

(30) Priorität: **03.11.1994 DE 4439149**
**18.01.1995 DE 19501290**
**07.03.1995 DE 19507990**

(43) Veröffentlichungstag der Anmeldung:
**20.08.1997 Patentblatt 1997/34**

(73) Patentinhaber: **Ostthüringische Materialprüfgesellschaft für Textil und Kunststoffe mbH Rudolstadt**
**07407 Rudolstadt (DE)**

(72) Erfinder:
- **MEISTER, Frank**
  **D-06132 Halle (DE)**
- **MICHELS, Christoph**
  **D-07407 Rudolstadt (DE)**
- **KRAMER, Horst**
  **D-07407 Rudolstadt (DE)**

(74) Vertreter: **Fechner, Joachim, Dr.-Ing.**
**Im Broeltal 118**
**53773 Hennef (DE)**

(56) Entgegenhaltungen:
**EP-A- 0 181 249** **EP-A- 0 692 558**
**DD-A- 274 435** **DE-C- 709 721**

- **DATABASE WPI Section Ch, Week 8901 Derwent Publications Ltd., London, GB; Class A11, AN 89-004012 & JP,A,63 282 307 ( KOHJIN KK) , 18.November 1988**
- **DATABASE WPI Section Ch, Week 7715 Derwent Publications Ltd., London, GB; Class A11, AN 77-25880Y & JP,A,52 026 561 ( NITTO SPINNING KK) , 28.Februar 1977**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 789 790 B1

Printed by Jouve, 75001 PARIS (FR)

**Beschreibung**

Die Erfindung betrifft Formkörper, insbesondere Fasern oder Folien, aus nach dem Aminoxid-Verfahren regenerierter Cellulose und ein Verfahren zur Herstellung dieser Formkörper.

Es ist bekannt, cellulosische Form- und Spinnmassen durch Lösen von Cellulose in Aminoxiden, vorzugsweise N-Methylmorpholin-N-oxid, und einem Nichtlösungsmittel für Cellulose, vorzugsweise Wasser, herzustellen. Durch die Verformung zu Fäden bzw. Formkörpern, Orientieren und Regenerieren der Cellulose erhält man Produkte mit vielfältiger Anwendbarkeit im textilen und nichttextilen Bereich (W. Berger, "Möglichkeiten und Grenzen alternativer Celluloseauflösung und -verformung", Lenzinger Berichte 74(1994) 9, Seiten 11-18).

Weiterhin sind Versuche bekannt, durch Zumischen von polymeren Zweitkomponenten die Eigenschaften der Celluloseprodukte zu verändern. Beschrieben wurden Zusätze von in dem Aminoxid löslichen aliphatischen und aromatischen Polyamiden und von Polyacrylnitril (B. Morgenstern, "Polymermischungen auf Cellulosebasis - ein Weg zur Eigenschaftsmodifizierung", Vortrag, Internationales Symposium Rudolstadt, 7./8. September 1994). Diese Zumischungen führten bisher zu keinen signifikanten Änderungen im Eigenschaftsbild der Celluloseprodukte.

Es ist ferner bekannt, daß durch Zumischen geringer Mengen niedermolekularer Substanzen mehr oder minder deutliche Verbesserungen der Stabilität der cellulosischen Form- und Spinnmassen erreicht werden. Diese Verbindungen sind solche mit mindestens vier Kohlenstoffatomen, die mindestens zwei konjugierte Doppelbindungen und mindestens zwei Hydroxyl- und/oder Aminogruppen enthalten (EP 0047919, DD 229708, DE 4106029). Weiterhin sollen stickstoffhaltige Substanzen, wie Harnstoff, Hydroxylamin, Hydrazin, schwefelhaltige Substanzen, wie Sulfite, Thiosulfate und Thioharnstoff, und kohlenstoffhaltige, reduzierend wirkende Substanzen, wie Aldehyde und Zucker, analog wirken (DD 158656). Ferner ist es bekannt, die Cellulosefäden bzw. -fasern nach dem Verformen der cellulosischen Spinnmasse und Regenerieren der Cellulose mit bi- bzw. mehrfunktionellen Verbindungen, wie Dicarbonsäuren, Methylolverbindungen und Cyanurchlorid, die mit den Hydroxylgruppen der Cellulose reagieren, zu behandeln. Die damit erreichte Vernetzung soll zu einer erhöhten Naßscheuerbeständigkeit der Cellulosefäden und -fasern führen. Ein wesentlicher Nachteil dieser direkten Vernetzung der Cellulosemoleküle besteht in einer deutlichen Zunahme der Sprödigkeit, die eine textile Verarbeitung der Fasern signifikant erschwert oder ganz unmöglich macht. Schließlich ist es bekannt, für die Ausrüstung reiner Baumwollgewebe auch Diisocyanate einzusetzen. Hierbei werden jedoch nicht die mit N-Methylol-Verbindungen erzielbaren Eigenschaften erreicht (Textilveredelung 20, (1985) S. 44).

In der EP-A-0 692 558, die einen Stand der Technik gemäß Art. 54(3),(4) darstellt, sind Regeneratcellulosefasern und Verfahren zu ihrer Herstellung nach dem Aminoxidverfahren beschrieben, wobei der Spinnlösung ein Polyethylenimin mit einem maximalen Polymerisationsgrad in der Kette von 651 zugesetzt ist. Celluloseregeneratformkörper und Verfahren zu ihrer Herstellung unter Zusatz von Polyethyleniminen bis zu diesem Polymerisationsgrad sind gemäß Maßgabe der Ansprüche 1 und 7 des vorliegenden Patents für die überlappenden Vertragsstaaten (AT, DE, ES, GB und SE) ausgenommen.

Der vorliegenden Erfindung liegt die Aufgabe zugrunde, einen Formkörper, insbesondere eine Faser oder Folie, aus nach dem Aminoxid-Verfahten regenerierter Cellulose zu schaffen, der im Vergleich zu den herkömmlichen, nach dem Aminoxid-Verfahren hergestellten Formkörpern aus Regeneratcellulose neue vorteilhafte Eigenschaften aufweist. Darüber hinaus sollen Formkörper aus nach dem Aminoxid-Verfahren regenerierter Cellulose geschaffen werden, die gegenüber den bekannten, nach diesem Verfahren hergestellten Formkörpern verbesserte Eigenschaften haben. Insbesondere sollen die neuen Formkörper Anionenaustauscheigenschaften und fungistatische Eigenschaften haben. Darüber hinaus soll das Absorptionsvermögen für Farbstoffe verbessert und verbreitert werden. Weiter ist es Ziel der vorliegenden Erfindung, Formkörper, insbesondere Fasern und Folien, aus regenerierter Cellulose mit verbesserter Naßscheuerbeständigkeit zu schaffen. Ferner sollen nach dem Aminoxid-Verfahren hergestellte Cellulose-Formkörper, wie Fasern und Folien, geschaffen werden, deren Cellulose im Verfahrensgang einen geringeren Polymerabbau erfährt als die nach herkömmlichen Aminoxid-Verfahren hergestellten Cellulose-Formkörper. Schließlich soll ein nach dem Aminoxid-Verfahren regenerierter Cellulose-Formkörper geschaffen werden, der durch Einsparung an Aminoxid, insbesondere an N-Methylmorpholin-N-oxid kostengünstiger herstellbar ist. Ferner soll auch ein Formkörper aus regenerierter Cellulose geschaffen werden, der neben der verbesserten Naßscheuerbeständigkeit auch einen guten Weißgrad aufweist. Außerdem soll die für die Herstellung des Cellulose-Formkörpers eingesetzte Cellulose-Lösung ohne Abtrennung beträchtlicher Wassermengen gebildet werden. Schließlich soll die Herstellung dieser Lösung einen verringerten Energieeinsatz erfordern.

Diese Aufgabe wird bei dem eingangs genannten Formkörper erfindungsgemäß dadurch gelöst, daß die Cellulose 0,02 bis 30 Masse-% eines Polyalkyleniminderivats der Formel

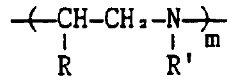

enthält, in der m eine ganze Zahl in dem Bereich von 20 bis 20 000 ist, R Wasserstoff oder Methyl und R' Wasserstoff oder eine noch an wenigstens ein Stickstoffatom eines anderen Moleküls des Polyalkyleniminderivats gebundene Gruppe der Formeln

$R''\!-\!(NH\!-\!CO)_n\!-$ (I), 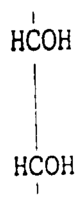 (II), 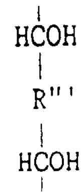 (III), 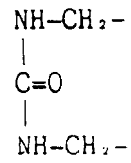 (IV),

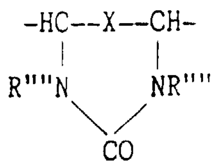 (V) oder 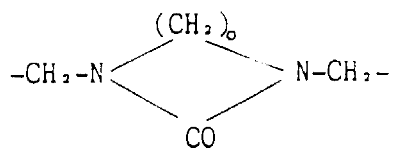 (VI)

bedeuten, in der R" eine Alkylen- oder Arylengruppe mit 2 bis 13 Kohlenstoffatomen, R"' Polyethylendiol (Polyethoxy), R"" Wasserstoff oder Alkyl und X eine Einfachbindung oder Methylen, n eine ganze Zahl von 2 bis 4 und o eine ganze Zahl ≥ 2 bedeuten, mit der Maßgabe, daß in der Formel m eine ganze Zahl in dem Bereich von 652 bis 20 000 ist, wenn R und R' Wasserstoff bedeuten. Diese Maßgabe gilt nicht für den Vertragsstaat NL.

Überraschenderweise wurde gefunden, daß die erfindungsgemäßen Formkörper gegenüber solchen aus nach dem herkömmlichen Aminoxid-Verfahren gebildeter Regeneratcellulose neue und verbesserte Eigenschaften haben. Die an die Cellulose nicht gebundenen, aber in ihr Netzwerk eingebauten Ethyleniminketten verleihen dem Formkörper die Eigenschaft eines hochaktiven Anionenaustauschers. Die Austauschkapazität hängt von dem Gehalt der Cellulose an Ethyleniminderivat ab, liegt aber generell höher als bei herkömmlichen Anionenaustauschern. Beispielsweise hat der erfindungsgemäße Formkörper mit 10 Masse-% Ethyleniminderivat die 6-fache Austauschkapazität wie ein herkömmlicher Anionenaustauscher. Der erfindungsgemäße Formkörper hat ein verbessertes Absorptionsvermögen für Farbstoffe. So können beispielsweise Säurefarbstoffe eingesetzt werden, die sich sonst nur zur Anfärbung von natürlichen oder synthetischen Amidfasern eignen. Weiter hat sich gezeigt, daß die erfindungsgemäßen Fasern, Folien und anderen Formkörper fungistatisch wirksam sind. Nachgewiesen wurde diese Wirksamkeit an den pathogenen Pilzen Trichophyton mentagrophytis, Epidermophyton floccosum und Fusarium oxysporum.

Die vernetzte Regeneratcellulosefaser der Erfindung zeichnet sich ferner durch eine beträchtliche Verbesserung der Naßscheuerbeständigkeit aus. Bekanntlich hat die nach dem Aminoxid-Verfahren regenerierte Cellulosefaser verfahrensbedingt eine Kristallstruktur, die bei Belastung im nassen Zustand zu verstärkter Fibrillierung neigt. Damit verbunden ist eine Herabsetzung der Naßscheuerbeständigkeit. Diese nachteilige Eigenschaft der "Aminoxidfaser" schränkt die Einsatzbreite dieser Faser im textilen Bereich ein. Überraschenderweise hat sich nun gezeigt, daß die Naßscheuerbeständigkeit wesentlich verbessert wird, wenn die nach dem Aminoxid-Verfahren gebildete Regeneratcellulose durch bi- oder polyfunktionelles Alkylenisocyanat vernetztes Polyethylenimin enthält. So hat sich z.B. gezeigt, daß die Naßscheuerbeständigkeit der nach dem Aminoxid-Verfahren hergestellten Regeneratcellulose etwa um den Faktor 30 verbessert wird, wenn die Cellulose etwa 5 Masse-% des Ethyleniminderivats enthält. Der bevorzugte Gehalt der Regeneratcellulose an Ethyleniminderivat liegt in dem Bereich von 0,1 bis 10 Masse-%.

In den oben genannten Vernetzungsmitteln der Formeln (II) bis (VI) bedeuten vorzugsweise o eine ganze Zahl von 2 bis 6, R"' Polyethylendiol mit einem Polymerisationsgrad von 2 bis 100 und R"" Wasserstoff oder Alkyl mit 1 bis 10 Kohlenstoffatomen, insbesondere mit 1 bis 4 Kohlenstoffatomen. Cellulose-Formkörper mit dem erfindungsgemäß vernetzten Polyalkyleniminderivat zeigen eine erhebliche Steigerung der Naßscheuerbeständigkeit im Vergleich zu in gleicher Weise hergestellten Cellulose-Formkörpern ohne vernetztes Polyalkylenimin. Dabei steigt die Naßscheuerbeständigkeit je nach Art des verwendeten Vernetzungsmittels und seiner Konzentration beispielsweise auf das 16 bis 70-fache der Naßscheuerbeständigkeit des Cellulose-Formkörpers ohne vernetztes Polyalkylenimin. Infolge der

Vernetzung nimmt die Versprödung des Cellulose-Formkörpers zu; sie bleibt aber in einem tolerierbaren Bereich.

Besonders geeignete Cellulose-Formkörper, insbesondere Fasern, erhält man, wenn die vernetzende Gruppe R' 1,3-Dimethylenpropylenharnstoff (obige Formel (V) mit n = 3) oder 1,3-Dimethylethylen4,5-diyl-harnstoff (obige Formel (IV) mit X = Einfachbindung und R"" = $-CH_3$) ist.

Die Aufgabe wird verfahrensmäßig gelöst durch ein Verfahren zur Herstellung von Cellulose-Formkörpern, insbesondere Fasern, Filamenten und Folien, nach dem Trocken-Naßextrusionsverfahren durch Bilden einer Polymerlösung mit 5 bis 25 Masse-% Cellulose, 85 bis 65 Masse-% eines tertiären Aminoxids, vorzugsweise N-Methylmorpholin-N-oxid, und 8 bis 16 Masse-% eines Nichtlösungsmittels für Cellulose, vorzugsweise Wasser, Verformen dieser Polymerlösung durch Pressen der Lösung durch Formdüsen, Verziehen des gebildeten Lösungsstrahls in einem nichtausfällenden Medium zwischen dem Düsenaustritt und dem Eintritt in ein Fäilbad, Ausfällen des Cellulose-Formkörpers, Nachbehandeln und Trocknen, dadurch gekennzeichnet, daß man eine Polymerlösung mit 0,02 bis 30 Masse-%, bezogen auf Cellulose, Polyalkylenimin der Formel

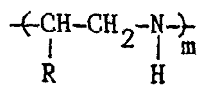

einsetzt, in der R Wasserstoff oder Methyl und m eine ganze Zahl in dem Bereich von 20 bis 20 000 bedeuten, und einen Polyalkylenimin enthaltenden Cellulose-Formkörper ausfällt, mit der Maßgabe, daß in der Formel m eine ganze Zahl in dem Bereich von 652 bis 20 000 ist, wenn R Wasserstoff bedeutet. Diese Maßgabe gilt nicht für den Vertragsstaat NL.

Es hat sich gezeigt, daß die Anwesenheit des Ethyleniminderivats nicht nur die Formkörpereigenschaften verbessert, sondern auch bei der Herstellung der Formkörper durch die Erhöhung der Stabilität der Polymerlösung Vorteile bringt. Der Celluloseabbau bei der Herstellung und der damit einhergehenden thermischen Belastung der Polymerlösung wird durch die Anwesenheit des Polyethylenimins stark gehemmt. Bei einstündiger Temperung bei 90°C zum Beispiel steigt die Nullscherviskosität bei 1 Masse-% Polyethylenimin auf über das 6-fache und bei 0,1 Masse-% Polyethylenimin noch auf das 3,7-fache der Nullscherviskosität der iminfreien Polymerlösung. Darüber hinaus konnte gefunden werden, daß auch die Zersetzung des Aminoxids in der Polymerlösung unter der genannten thermischen Belastung durch den Imingehalt ganz wesentlich verringert wird, Beispielsweise sinkt die Zersetzung des N-Methylmorpholin-N-oxids in der Polymerlösung auf etwa 7% bei Zusatz von 1 Masse-% Ethyleniminderivat und auf 17% bei einem Zusatz von 0,01 Masse-% Ethyleniminderivat, verglichen mit der Zersetzung des N-Methylmorpholin-N-oxids in einer Polymerlösung ohne einen solchen Zusatz. Damit ist die stabilisierende Wirkung auf N-Methylmorpholin-N-oxid durch den erfindungsgemäßen Formkörperbestandteil wesentlich stärker als durch die bekannten Stabilisatoren des 4-Hydroxyphenylcarbonsäuretyps. Schließlich hat sich auch gezeigt, daß die Hemmung des Polymerabbaus der Cellulose durch die Stabilisatoren des genannten Typs bei Form- und Spinnmassen mit dem erfindungsgemäßen Zusatz an Polyethylenimin wesentlich stärker ist als bei an Polyethylenimin freien Formmassen. Die bekannten Stabilisatoren des genannten Typs können daher in den Polymer lösungen zur Herstellung der erfindungsgemäßen Formkörper in geringerer Konzentration eingesetzt werden als in Formmassen, die frei von Polyethylenimin sind. Dieser wahlweise Zusatz des genannten Stabilisators erfolgt in einer Menge in dem Bereich von 0,01 bis 0,5 Masse-%, vorzugsweise in einer Menge von 0,01 bis 0,1 Masse-%. Geeignete Stabilisatoren des genannten Typs sind Verbindungen der allgemeinen Formel

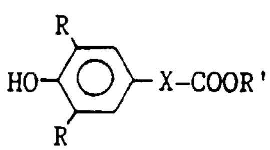

(2)

worin R Wasserstoff, Hydroxyl oder Alkyl mit 1 bis 18, vorzugsweise 1 bis 5 Kohlenstoffatomen, R' Wasserstoff oder Alkyl mit 1 bis 18, vorzugsweise 1 bis 5 Kohlenstoffatomen und X Ethylen oder eine direkte Einfachbindung bedeuten.

Obwohl die Polyethylenimin-Kettenmoleküle keine reaktive Bindung mit den Molekülen der regenerierten Cellulose eingehen, ist ihre Einbindung in das Cellulosenetzwerk so intensiv, daß ein nachträgliches Herauslösen, z.B. durch mehrstündiges Behandeln mit heißem Wasser nicht möglich ist. Die neuen und verbesserten Eigenschaften der erfindungsgemäßen Formkörper sind daher waschbeständig.

Nach einer bevorzugten Ausführungsform des erfindungsgemäßen Verfahrens behandelt man den Polyalkylenimin enthaltenden Cellulose-Formkörper in Gegenwart von Wasser mit wenigstens einem Polyisocyanat der Formel

$R''(NCO)_n$

in der R" einen aliphatischen oder aromatischen Rest mit 2 bis 13 Kohlenstoffatomen und n eine ganze Zahl von 2 bis 4 bedeuten. Insbesondere ist der aliphatische oder aromatische Rest Alkylen bzw. Arylen und ist n die Zahl 2. Insbesondere erfolgt diese Behandlung zwischen der Ausfällung und der Trocknung des ausgefällten Formkörpers.

Bei einer anderen Ausführungsform ist das erfindungsgemäße Verfahren dadurch gekennzeichnet, daß man den Polyalkylenimin enthaltenden Cellulose-Formkörper in Gegenwart von Wasser mit einem mit den Iminogruppen des Polyalkylenimins reagierenden Mittel aus der Gruppe mit den Formeln

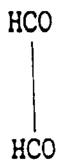 (II), 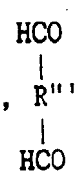 (III), 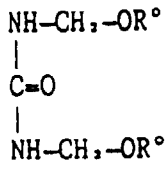 (IV), 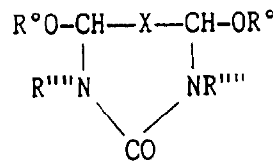 (V)

und

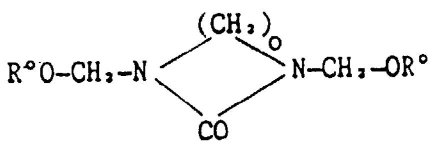 (VI)

in denen o, R"', R"" und X die in Anspruch 1 angegebene Bedeutung haben und R° Wasserstoff oder Methyl bedeutet, behandelt und durch Erhitzen auf eine Temperatur in dem Bereich von 95 bis 125 °C in Gegenwart eines Katalysators das Polyalkylenimin vernetzt. Die Behandlung und Vernetzung erfolgt vorzugsweise zwischen der Ausfällung des Cellulose-Formkörpers und der endgültigen Trocknung. So kann die Behandlung in einen Avivagebad durchgeführt werden, das das Vernetzungsmittel und den Katalysator enthält. Der Behandlungszeitraum kann in dem Bereich von 0,5 bis 30 Minuten liegen. Der Vernetzungsdauer bei der erhöhten Temperatur liegt vorzugsweise in dem Bereich von 1 bis 3 Minuten.

Nach der bevorzugten Ausführungsform des erfindungsgemäßen Verfahrens erhitzt man den Polyalkylenimin enthaltenden Cellulose-Formkörper auf eine Temperatur in dem Bereich von 100 bis 110 °C. Im Vergleich zur Umsetzung cellulosischer OH-Gruppen mit Methylolgruppen enthaltenden Verbindungen kann die erfindungsgemäße Vernetzung bei tieferer Reaktionstemperatur durchgeführt werden, und es ergibt sich eine geringere Versprödung der Cellulosefaser.

Zweckmäßig setzt man als Katalysatoren sauer wirkende Salze der Metalle der 2. und/oder 3. Haupt- bzw. Nebengruppe des Periodischen Systems ein. Geeignete Salze sind Magnesiumsulfat, Zinksulfat, Aluminiumsulfat, Magnesiumchlorid und Magnesiumacetat.

In weiterer Ausgestaltung des erfindungsgemäßen Verfahrens ist zur Bildung der Polymerlösung vorgesehen, daß man

a) Cellulose bei Temperaturen zwischen 20 und 70°C und einem pH-Wert zwischen 3 und 10 mit Cellulase in einer Menge in dem Bereich von 0,1 bis 10 Masse-%, bezogen auf Cellulose, in einer wässrigen Flotte enzymatisch vorbehandelt,
b) die vorbehandelte Cellulose von der Flotte abtrennt, und
c) die abgetrennte Cellulose in eine Schmelze mit einem Molverhältnis N-Methylmorpholin-N-oxid zu Wasser in dem Bereich von 1:≤ 1,2 bis 1 ≥ 0,8 einträgt und bis zum vollständigen Lösen schert.

Überraschenderweise hat sich gezeigt, daß die Auflösung von Cellulose in N-Methylmorpholin-N oxid Monohydrat wesentlich erleichtert wird, wenn die Cellulose erfindungsgemäß enzymatsich vorbehandelt ist. Die vorbehandelte Cellulose kann daher direkt in die Schmelze des NMMNO-Monohydrats, die geringe Überschußmengen Wasser oder NMMNO enthalten kann, gelöst werden, ohne daß man den Umweg über eine wässrige NMMNO-Lösung mit hohem Wasseranteil (z.B. 40% Waser) nehmen muß. Bei dem erfindungsgemäßen Verfahren ist in der Stufe c) vergleichsweise wenig Wasser zu verdampfen. Hierdurch und durch die wesentliche Verkürzung der Lösungszeit für die Cellulose ergibt sich eine Verringerung der Energieverbrauchs und des apparativen Aufwands für die Lösungsstufe.

Nach der bevorzugten Ausführungsform des erfindungsgemäßen Verfahrens setzt man in der Stufe c) ein durch Konzentrierung des bei der Verspinnung der Celluloselösung angefallenen Spinnbades erhaltenes Konzentrat ein. Die Konzentrierung des Spinnbades z.B. durch Eindampfung in einer Mehrstufen-Verdampferanlage unmittelbar bis zum Monohydrat oder noch weiter läßt sich wesentlich energiesparender und für das NMMNO schonender durchführen als wenn die Konzentrierung von z.B. 60 auf 87 Masse-% NMMNO in der Lösestufe aus der hochviskosen Cellulosesuspension bzw. -lösung erfolgt. Zweckmäßigerweise wird das Konzentrat auf wenigstens 86,7 Masse-% NMMNO, d.h. bis wenigstens zur Monohydratstufe konzentriert. Eine möglichst hohe Konzentrierung erscheint dann zweckmäßig, wenn die in Stufe b) abgetrennte Cellulose noch erheblich Feuchtigkeitsanteile enthält. In diesem Falle wird man die Cellulose in eine möglichst wasserarme Schmelze eintragen deren Molverhältnis NMMNO:$H_2O$ zweckmäßigerweise 1: < 1 ist.

Zweckmäßigerweise führt man die Auflösung der Cellulose in der Stufe c) bei einer Temperatur in dem Bereich von 72 bis 95°C durch. Die am meisten bevorzugten Temperaturen liegen zwischen 80 und 90°C.

Vorzugsweise entgast man die Cellulosesuspension während des Lösevorgangs unter Vakuum. Die in Stufe c) gegebenenfalls abzuführenden geringen Wassermengen werden dadurch schnell und unter Schonung des Lösungsmittels entfernt.

Die Vorbehandlung wird vorzugsweise mit einem Cellulasegehalt in derFlotte in dem Bereich von 0,5 bis 3,0 Masse-% durchgeführt. Die bevorzugte Vorbehandlungstemperatur liegt in dem Bereich von 30 bis 60°C. Im allgemeinen führt man die Vorbehandlung mit einem Flottenverhältnis Cellulose/Wasser in dem Bereich von 1:3 bis 1:30 durch. Der pH-Wert liegt bevorzugt in dem Bereich von 4,5 bis 8. Die Abtrennung der enzymatisch vorbehandelten Cellulose von der Flotte kann z.B. durch Abpressen oder Zentrifugieren erfolgen.

Um die Wirksamkeit der enzymatischen Vorbehandlung zu steigern, kann man die Cellulose vor der Vorbehandlung unter Scherung in Wasser aufschlagen. Die Cellulasen können bei dieser Vorstufe in der Flotte bereits enthalten sein, oder sie können erst nach dem Aufschlagen der Flotte zugesetzt werden. Durch die Vorstufe wird die enzymatische Aktivierung des Cellulose begünstigt und die Dauer der enzymatischen Vorbehandlung verkürzt. Vorzugsweise liegt die Dauer der enzymatischen Vorbehandlung in dem Bereich von 0,2 bis 3 Stunden, insbesondere in dem Bereich von 0,75 bis 2,0 Stunden. Als Enzym können im Handel erhältliche Cellulasen, z.B. Rucolase der Fa. Rudolph Chemie oder Roglyr 1538 der Fa. Rotta GmbH eingesetzt werden.

Zweckmäßigerweise führt man die in Stufe b) abgetrennte Flotte nach Ergänzung des verbrauchten Enzyms in die Stufe a) zurück, wodurch die Kosten für das Enzym minimiert werden. Die weitgehend von der Flotte abgetrennte Cellulose wird kontinuierlich oder diskontinuierlich in die Schmelze aus NMMNO und $H_2O$ eingetragen. Die erhaltene homogene Lösung kann unmittelbar zum Verspinnen zu Fäden eingesetzt werden.

Die Erfindung wird nachfolgend durch Beispiele und Vergleichsbeispiele erläutert. Zur Beurteilung der stabilisierenden Wirkung des Polyethylenimins auf den Polymerabbau und Aminoxid-Zersetzung diente die Bestimmung der Nullscherviskosität durch Aufnahme der Fließkurve und deren Auswertung nach dem "Carreau"-Ansatz bzw. die Bestimmung der wasserdampfflüchtigen Basen in der getemperten Polymerlösung.

1. Bestimmung der Nullscherviskosität

In ein Rotationsviskosimeter mit Kegel/Platte-System werden 2,5 g Polymerlösung eingefüllt und bei einer Massetemperatur von 95°C die Schubspannung in Abhängigkeit von der Schergeschwindigkeit im Bereich von 0,01 bis 1,5 l/s gemessen. Die Fließkurve wird automatisch nach der Gleichung (1) ausgewertet

$$\eta_0 = \eta_{\dot{\gamma}}(1+b\dot{\gamma})^{c} \qquad (1)$$

2. Bestimmung der wasserdampfflüchtigen Basen

Aus einer Mischung von 20 bis 100 g Polymerlösung und 100 g Wasser werden mittels Wasserdampf die durch Aminoxidzersetzung entstandenen flüchtigen Basen abdestilliert, in 0,1 n Schwefelsäure aufgefangen und durch konduktometrische Rücktitration mit 0,05 n Natronlauge bestimmt. Die Berechnung erfolgt als N-Methylmorpholin. Herstellung der Form- und Spinnmasse

Ausführungsform 1

In einem Kneter werden 600 g wässrige 65%ige N-Methylmorpholin-N-oxid-Lösung (NMMNO), die 5 g Polyethylenimin (PEI) einer Molmasse von etwa 50.000 enthält, vorgelegt und 45 g enzymatisch vorbehandelte Cellulose (Fichtenzellstoff Cuoxam-DP 590) zugegeben. Bei 85°C und einem Vakuum von 20 mbar werden während 30 Minuten 150

g Wasser abdestilliert. Es entsteht eine hellgelbe, von Faserresten freie Lösung mit einem Brechungsindex von 1,4830 bei 50°C. Die Polymerlösung besteht aus 9% Cellulose, 1% PEI und 90% NMMNO-Monohydrat und kann unmittelbar zur Verspinnen eingesetzt werden.

Ausführungsformen 2a bis 2d

Es wurde wie in Ausführungsform 1 gearbeitet, wobei jedoch die Polymerlösung 2,5 g, 0,5 g, 0,1 g bzw. 0,05 g PEI enthielt.

Ausführungsform 3

Es wurde wie in Ausführungsform 1 gearbeitet, wobei aber in der Polymerlösung anstelle der 5 g PEI nur 0,1 g PEI und 0,1 g 3-(3,5 tert.-butyl-4-nydroxyphenyl)-propionsäure enthalten waren.

Ausführungsform 4

Es wurde wie in Ausführungsform 1 gearbeitet, wobei aber in der Polymerlösung anstelle der 5 g PEI nur 0,1 g PEI und 0,05 g Gallussäurepropylester enthalten waren.

Ausführungsformen 5 bis 7

Bei der Ausführungsform 5 wurde wie in Ausführungsform 1 gearbeitet, jedoch ohne Zusatz von PEI. In den Ausführungsformen 6 und 7 wurde ohne Zusatz von PEI, jedoch mit Zusatz von 0,1 g 3-(3,5-tert.-butyl-4-hydroxyphenyl)-propionsäure bzw. 0,05 g Gallussäurepropylester gearbeitet.

Die Polymerlösungen nach den Ausführungsformen 1 bis 7 wurden eine Stunde bei 90°C getempert. Dann wurde die Nullscherviskosität und der Gehalt an flüchtigen Basen bestimmt. Die Ergebnisse enthält die Tabelle 1.

TABELLE 1

| Ausführungsformen | PEI %[1)] | Verb. d. Formel 2 %[1)] | $\eta_o$ Pa·s | Flücht. Basen %[2)] |
|---|---|---|---|---|
| 1 | 1,0 | - | 4210 | 0,08 |
| 2a | 0,5 | - | 3880 | 0,09 |
| 2b | 0,1 | - | 2550 | 0,10 |
| 2c | 0,02 | - | 2100 | 0,13 |
| 2d | 0,01 | - | 1640 | 0,20 |
| 3 | 0,02 | 0,02 | 3090 | 0,11 |
| 4 | 0,02 | 0,01 | 4680 | 0,06 |
| 5 | - | - | 680[3)] | 1,17 |
| 6 | - | 0,02 | 1980 | 0,64 |
| 7 | - | 0,01 | 2620 | 0,46 |

1) bezogen auf die Form- und Spinnmasse
2) bezogen auf den gesamten NMMNO-Anteil
3) Cuoxam-DP 405

Beispiel 1

Die Polymerlösung aus Ausführungsform 2a wird über eine Spinnpumpe einer Spinndüse (D = 70 um; L/D = 1) mit 1200 Kapillaren zugeführt und zu Fäden verformt, im Verhältnis 1:2,9 im Luftspalt verzogen, die Cellulose in wässriger NMMNO-Lösung ausgefällt und das NMMNO ausgewaschen. Die Fäden durchlaufen während 2 Minuten ein Bad aus einer wässrigen Flotte, die 1 % Hexamethylendiisocyanat-Kaliumhydrogensulfit-Addukt enthält. Anschließend werden die Fäden gewaschen, gebleicht, präpariert, zu Stapeln geschnitten und getrocknet.

Beispiel 2

Es wird wie in dem Beispiel 1 gearbeitet, jedoch die Polymerlösung nach Ausführungsform 4 eingesetzt.

Vergleichsbeispiel 1

Es wird wie in Beispiel 1 gearbeitet, jedoch die Polymerlösung nach der Ausführungsform 7 eingesetzt.

Es wurden die textilmechanischen Parameter der nach den Beispielen 1 und 2 und dem Vergleichsbeispiel 1 erhaltenen Fasern bestimmt. Außerdem wurde die Naßscheuerbeständigkeit nach der Methode von K.P. Mieck u.a. bestimmt, vergl. Lenzinger Berichte, 74 (1994) 9, S. 61-68. Die ermittelten Daten sind in der Tabelle 2 zusammengestellt.

TABELLE 2

| Parameter | Beisp. 1 | Beisp. 2 | Vergleichsbeisp. 1 |
|---|---|---|---|
| PEI-Gehalt % | 5,3 | 0,22 | - |
| Feinheit dtex | 1,70 | 1,72 | 1,70 |
| Reißfestigkeit cN/tex | 45,2 | 44,7 | 42,8 |
| Reißdehnung % | 11 | 11 | 12 |
| Schlingenfestk.cN/tex | 8,4 | 10,6 | 17,2 |
| Naßscheuerbest. Touren | 3550 | 570 | 12 |

Beispiel 3

Eine Polymerlösung entsprechend Ausführungsform 1 wird nach Beispiel 1 ohne die Nachbehandlung mit Hexamethylendiisocyanat-Kaliumhydrogensulfit-Addukt zu Cellulosefasern der Feinheit 1,7 dtex versponnen, zu Stapeln von 30 mm Länge geschnitten und auf eine Endfeuchte von ca. 80% getrocknet. 1 kg getrocknete Faser enthält 2,3 Mol austauschaktive Gruppen und eine rechnerische Oberfläche von etwa 220 $m^2$. Zur Reinigung eines mit Farbstoff beladenen Abwassers werden 10 g Fasern in einer G1-Fritte vorgelegt und das Abwasser mit einer Geschwindigkeit von 12 cm/min durchgeleitet. Nach Durchfluß von 9,2 l Abwasser ist eine leichte Verfärbung des Eluats zu beobachten. Die Faser ist erschöpft.

Vergleichsbeispiel 2

Es werden 10g eines Harzes, das 0,9 Mol aktive $-N(CH_3)_2$-Gruppen pro kg enthält, in die Gl-Fritte gefüllt. Es wird das gleiche Abwasser wie in Beispiel 3 mit der gleichen Geschwindigkeit durchgeleitet. Bei einem durchschnittlichen Korndurchmesser von 1 mm und annähernd gleicher Dichte beträgt die rechnerische Oberfläche des Harzes nur ca. 4 $m^2$. Das Eluat ist nach einem Durchfluß von 1,5 l leicht gefärbt; das Harz ist erschöpft. Das Kapazitätsverhältnis zu der Faser nach Beispiel 3 betragt ca. 1:6.

Beispiel 4

Eine Polymerlösung nach Ausführungsform 2b wird entsprechend Beispiel 1 versponnen und auf ihre fungistatische Wirkung geprüft. Diese Prüfung erfolgt in Petrischalen, die als Nährboden Sabourand-2% Glucose-Agar (Merck) enthalten. In Ronden von 25 mm Durchmesser wird eine definierte Menge von desinfizierten Fasern aufgelegt und mit einer Sporensuspension von $10^6$ Trichophyton mentagrophytis bzw. Epidermophyton floccosum bzw. Fusarium oxysporum pro ml physiologische Kochsalzlösung beimpft und im Brutschrank bei 28±1°C und 96 bis 97% relativer Luftfeuchtigkeit bebrütet. Die Beurteilung des Mycelwachstums erfolgt visuell nach Noten 1 bis 3 nach jeweils 1, 3, 7 und 14 Tagen. Die Ergebnisse enthält die Tabelle 3.

Vergleichsbeispiel 3

Es wurde wie in Beispiel 4 gearbeitet, wobei aber eine Faser eingesetzt wurde, die nach Vergleichsbeispiel 1 ersponnen wurde. Die Ergebnisse sind ebenfalls in Tabelle 3 angegeben.

TABELLE 3

| Bebrütungsdauer Tage | Vergleichsbeispiel 3 | | | Beispiel 4 | | |
|---|---|---|---|---|---|---|
| | TM | EF | FO | TM | EF | FO |
| 1 | 2 | 0 | 1 | 0 | 0 | 0 |
| 3 | 2-3 | 2-3 | 3 | 0 | 0 | 0 |
| 7 | 3 | 3 | 3 | 0 | 0 | 1 |
| 14 | 3 | 3 | 3 | 1 | 0 | 2 |
| 0 = kein Bewuchs; 1 = dünnes Mycel; 2 = dünnes flaumiges Mycel oder einzelne Kolonien; 3 = dichtes flaumiges Mycel oder viele Kolonien | | | | | | |

Beispiel 5

In einen beheizbaren Rührbehälter werden kontinuierlich N-Methylmorpholin-N-oxid-Monohydrat (NMMNO-MH), das 0,163 % Polyethylenimin (Molmasse 50 000) enthält, und enzymatisch aktivierte Cellulose (Eukalyptuszellstoff, Cuoxam-DP 540) mit einem Wassergehalt von 50 % im Verhältnis 3,1:1 eindosiert, gemischt und auf 85 °C temperiert. Über eine Dickstoffpumpe gelangt die Mischung kontinuierlich in einen Extruder mit Vakuumentgasung. Nach dem Verdampfen von 12,2 % Wasser und vollständiger Entgasung entsteht eine homogene hellgelbe Spinnlösung der Zusammensetzung 13,86 % Cellulose, 0,14 % Polyethylenimin, 76,6 % NMMNO und 9,4 % Wasser mit einem Brechungsindex von 1,4866 bei 50°C.

Die Polymerlösung passiert mit einem Volumenstrom von 116 ml/min ein Filter, wird über eine Spinnpumpe einer Spinndüse mit 1200 Kapillaren (D = 60 um, L/D = 1) zugeführt, zu Fäden verformt, in einem Luftspalt von 6 mm Breite im Verhältnis 1:2,9 verzogen und in wässriger NMMNO-Lösung als Cellulose/PEI-Mischung ausgefällt. Der multifile Faden wird von einem Spinntrichter erfaßt und transportiert, mit 70 m/min über eine Galette abgezogen und zur Entfernung des NMMNO gewaschen.

Der Faden wird in Stapel geschnitten; die Fasern werden gebleicht, in einem Bad, das 10 g/l Glyoxal, 1 g/l Magnesiumsulfat und Avivage enthält, während 2 Minuten behandelt, abgepreßt und anschließend bei 100 bis 110 °C getrocknet und vernetzt. Die Fasern hatten eine Feinheit von 1,7 dtex. Die Naßscheuerbeständigkeit und die Schlingenreißkraft sind in der Tabelle angegeben. Die Naßscheuerbeständigkeit wurde nach der Methode von K.P.Mieck u. a. bestimmt, vergl. Lenzinger Berichte, 74 (1994) 9, S. 61-68. Die Schlingenreißkraft dient als Maß der Versprödung und sollte 6 cN/tex nicht unterschreiten.

Beispiele 6 bis 10

Es wurde analog Beispiel 5 gearbeitet, jedoch mit anderen Vernetzungsmitteln und anderen Vernetzungsmittelkonzentrationen. Ebenso wurde der Katalysator und die Katalysatorkonzentration variiert. Die entsprechenden Werte sind ebenfalls in der Tabelle 4 angegeben.

Vergleichsbeispiel 4

Es wurde in der gleichen Weise wird in Beispiel 5 gearbeitet. Das Avivagebad enthielt jedoch kein Vernetzungsmittel. Die ermittelten Fasereigenschaften sind ebenfalls in der Tabelle 4 angegeben.

TABELLE 4

| Beispiel | Vernetzer | Konz. g/l | Katalysator | Konz. g/l | Naßscheuerbeständigkeit Touren | Schlingenreißkraft cN/tex |
|---|---|---|---|---|---|---|
| 5 | Glyoxal | 10 | $MgSO_4$ | 1,0 | 380 | 9,8 |
| 6 | Glyoxal | 6 | $MgSO_4$ | 0,5 | 220 | 10,4 |
| 7 | Dimethylolharnstoff | 35 | $MgCl_2$ | 8,5 | 750 | 7,2 |
| 8 | 1,3-Dimethyl-4,5-dihydroxyethylenharnstoff | 40 | $MgCl_2$ | 9,0 | 980 | 6,1 |
| 9 | 1,3-Dimethoxypropylenharnstoff | 15 | Mg-Acetat | 2,5 | 630 | 6,9 |
| 10 | Polyethylendiacetal (Molmasse ≈ 400) | 20 | $MgCl_2$ | 1,0 | 410 | 11,2 |
| VB[4] | - | - | - | - | 14 | 14,2 |

Enzymatische Vorbehandlung der Cellulose und Bildung der Celluloselösung Ausführungsformen 8 bis 13

5 kg eines Fichtesulfitblattzellstoffes (α-Cellulosegehalt 96,5%, Cuoxam-DP 630 bzw. 431) werden in einem beheizbaren Turbolöser in Wasser im Flottenverhältnis 1:5 bis 1:20 aufgeschlagen, auf eine Temperatur zwischen 30 und 60°C erwärmt, unter Rühren mit verdünnter Schwefelsäure bzw. Natronlauge auf pH-Werte zwischen 4,5 und 8 eingestellt, mit 0,5 bis 3 Masse-% Enzym, bezogen auf α-Cellulose versetzt und während eines Zeitraums von 0,75 bis 2 Stunden behandelt. Die Behandlungsbedingungen für die einzelnen Beispiele sind in der Tabelle angegeben. Die enzymhaltige Flotte wird durch Zentrifugieren oder Abpressen von der Cellulose (Wassergehalt ≤ 50%) weitgehend abgetrennt. Die Flotte findet nach Ergänzung der Wasser- und Enzymverluste erneuten Einsatz im Turbolöser.

| Ausf.-form | DP vor | Enzym | % Enz. | FV | pH | °C | Min. | DP nach |
|---|---|---|---|---|---|---|---|---|
| 8 | 632 | Rucolase[1] | 3 | 1:20 | 4,5 | 52 | 60 | 612 |
| 9 | 632 | Roglyr 1538[2] | 1 | 1:5 | 5.0 | 55 | 45 | 609 |
| 10 | 632 | SP 424[3] | 3 | 1:10 | 5,0 | 30 | 120 | 605 |
| 11 | 430 | SP 424 | 2 | 1:10 | 5,0 | 55 | 60 | 385 |
| 12 | 430 | SP 640 | 0,5 | 1:15 | 8,0 | 60 | 90 | 402 |
| 13 | 430 | SP 431 . | 2,5 | 1:20 | 6,0 | 55 | 60 | 390 |

[1] Produkt der Firma Rudolph Chemie
[2] Produkt der Firma Rotta GmbH
[3] Versuchsprodukte der Firma Novo Nordisk

Aus der Tabelle ist ersichtlich, daß der Abbau des Polymerisationsgrades unter den Bedingungen der enzymatischen Vorbehandlung vergleichsweise gering ist.

Ausführungsform 14

In einen Laborkneter mit Austragsschnecke werden bei 85°C 888 g NMMNO-Hydrat-Schmelze (Molverhältnis NMMNO:$H_2O$ = 1:0,9; Brechungsindex bei 50°C n = 1,4788) vorgelegt und 167 g der nach Ausführungsform 8 erhaltenen Cellulose (Wassergehalt 40%) eingetragen. Nach 5 minuten Rührung unter Vakuum von 20 mBar erhält man 1 kg einer homogenen, gelben und luftblasenfreien Polymerlösung aus 10% Cellulose und 90% NMMNO-Monohydrat mit einem Brechungsindex bei 50°C von 1,4810.

Die aus den Ausführungsformen 9 bis 13 erhaltenen Cellulosen können auf analoge Art und Weise in ähnlich kurzen Zeiten in homogene Polymerlösungen überführt werden.

Ausführungsform 15

40 g/min nach Ausführungsform 10 vorbehandelte Cellulose (Wassergehalt 37,5%) werden über eine Waage kontinuierlich einem Doppelschneckenextruder (DSE, Schneckendurchmesser 25 mm) zugeführt. Uber eine Förderpumpe dosiert man 219 g/min Aminoxidschmelze (Molverhältnis NMMNO:$H_2O$ = 1:0,9) in die erste Zone des DSE, der durchgängig auf 85°C beheizt ist. Nach dem Mischen beider Komponenten gelangt die Mischung in die Entgasungszone, wo sie unter Vakuum von 15 bis 20 mBar entgast wird und überschüssiges Wasser in einer Menge von 9 g/min entfernt wird. Bei einer durchschnittlichen Verweilzeit von 5 Minuten verlassen 250 g/min homogene Polymerlösung (Brechungsindex n = 1,4794 bei 50°C) kontinuierlich den DSE. Die Lösung besteht aus 10% Cellulose und 90% NMMNO-Hydrat (Molverhältnis NMMNO: $H_2O$ = 1:1,1).

Ausführungsform 16

Analog Ausführungsform 15 werden 48 g/min nach Ausführungsf. 13 vorbehandelte Cellulose (Wassergehalt 37,5%) dem DSE zugeführt, mit 216 g/min Aminoxidschmelze (Molverhältnis NMMNO:$H_2O$ = 1:0,9) gemischt und untergleichzeitiger Wasserabführung von 14 g/min entgast. Dem Extruder werden kontinuierlich 250 g/min homogene Polymerlösung (Brechungsindex n = 1,4813 bei 50°C) mit der Zusammensetzung 12% Cellulose und 88% Aminoxid-Hydrat (Molverhältnis NMMNO:$H_2O$ = 1:1,05) entnommen.

Ausführungsform 17

Es werden wie in Ausführungsform 14 in einem Laborkneter mit Austragsschnecke 888 g Aminoxid-Hydrat-Schmelze (Molverhältnis NMMNO:$H_2O$ = 1:0,9; Brechungsindex bei 50°C n = 1,4788) mit 85°C vorgelegt. Anstelle der vorbehandelten Cellulose werden 167 g Fichtesulfitblattzellstoff ($\alpha$-Cellulosegehalt 96,5%, Cuoxam-DP 630) eingetragen, der in einem beheizbaren Turbolöser in Wasser im Flottenverhältnis 1:15 aufgeschlagen und dann auf einen Wassergehalt von 40% entwässert worden war. Das Gemisch wurde unter Vakuum von 20 mBar gerührt. Es zeigte folgendes Aussehen nach

| | |
|---|---|
| 1 Stunde : | Wesentliche Anteile sind angequollen; |
| 6 Stunden: | Wesentliche Anteile sind gelöst; |
| 12 Stunden: | Vereinzelte ungelöste Faserreste. |

Ausführungsform 18

Es wurde ebenso wie in Ausführungsform 17 gearbeitet, jedoch wurde der Zellstoff nicht aufgeschlagen, sondern einer Feinstmahlung in einer Conduxmühle unterzogen und trocken der NMMNO-Monohydrat-Schmelze zugesetzt. Das Aussehen der Mischung beim Rühren unter Vakuum von 20 mBar war nach

| | |
|---|---|
| 1 Stunde : | Geringe Anteile sind angequollen; |
| 6 Stunden: | Wesentliche Anteile sind gequollen, geringe Anteile gelöst; |
| 12 Stunden: | Erhebliche Anteile sind noch ungelöst. |

## Patentansprüche

**Patentansprüche für folgende Vertragsstaaten : AT, DE, ES, GB, SE**

**1.** Formkörper, insbesondere Faser oder Folie, aus nach dem Aminoxid-Verfahren regenerierter Cellulose, dadurch gekennzeichnet, daß die Cellulose 0,02 bis 30 Masse-% eines Polyalkyleniminderivats der Formel

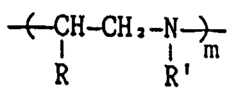 (0)

enthält, in der m eine ganze Zahl in dem Bereich von 20 bis 20 000 ist, R Wasserstoff oder Methyl und R' Wasserstoff oder eine noch an wenigstens ein Stickstoffatom eines anderen Moleküls des Polyalkyleniminderivats gebundene Gruppe der Formeln

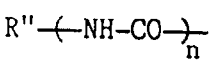 (I), 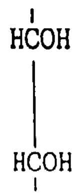 (II), 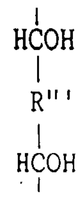 (III), 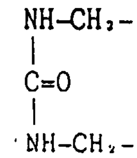 (IV),

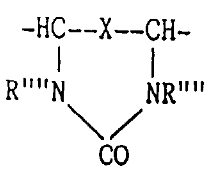 (V) oder 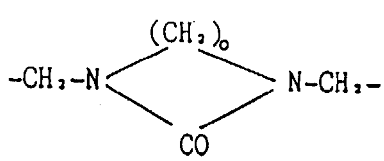 (VI)

bedeuten, in der R" eine Alkylen- oder Arylengruppe mit 2 bis 13 Kohlenstoffatomen, R"' Polyethylendiol, R""

Wasserstoff oder Alkyl und X eine Einfachbindung oder Methylen, n eine ganze Zahl von 2 bis 4 und o eine ganze Zahl ≥ 2 bedeuten, mit der Maßgabe, daß m eine ganze Zahl in dem Bereich von 652 bis 20 000 ist, wenn R und R' Wasserstoff bedeuten.

**2.** Formkörper nach Anspruch 1, dadurch gekennzeichnet, daß die Cellulose 0,1 bis 10 Masse-% des Polyalkyleniminderivats enthält.

**3.** Formkörper nach Anspruch 1 oder 2, dadurch gekennzeichnet, daß R' die Gruppe

$$-CO-NH-(CH_2)_6-NH-CO-$$

ist.

**4.** Formkörper nach einem der Ansprüche 1 bis 3, dadurch gekennzeichnet, daß m eine ganze Zahl in dem Bereich von 200 bis 5000 ist.

**5.** Formkörper nach Anspruch 1, dadurch gekennzeichnet, daß R' die Gruppe

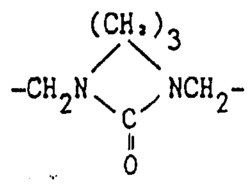

ist.

**6.** Formkörper nach Anspruch 1, dadurch gekennzeichnet, daß R' die Gruppe

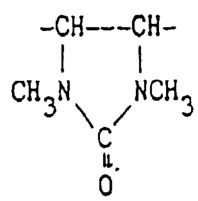

ist.

**7.** Verfahren zur Herstellung von Cellulose-Formkörpern, insbesondere Fasern, Filamenten und Folien, nach dem Trocken-Naßextrusionsverfahren durch Bilden einer Polymerlösung mit 5 bis 25 Masse-% Celluiose, 85 bis 65 Masse-% eines tertiären Aminoxids, vorzugsweise N-Methylmorpholin-N-oxid, und 8 bis 16 Masse-% eines Nichtlösungsmittels für Cellulose, vorzugsweise Wasser, Verformen dieser Polymerlösung durch Pressen der Lösung durch Formdüsen, Verziehen des gebildeten Lösungsstrahls in einem nichtausfällenden Medium zwischen dem Düsenaustritt und dem Eintritt in ein Fällbad, Ausfällen des Cellulose-Formkörpers, Nachbehandeln und Trocknen, dadurch gekennzeichnet, daß man eine Polymerlösung mit 0,02 bis 30 Masse-%, bezogen auf Cellulose, Polyalkylenimin der Formel

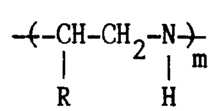

einsetzt, in der R Wasserstoff oder Methyl und m eine ganze Zahl in dem Bereich von 20 bis 20 000 bedeuten, und einen Polyalkylenimin enthaltenden Cellulose-Formkörper ausfällt, mit der Maßgabe, daß in der Formel m

eine ganze Zahl in dem Bereich von 652 bis 20 000 ist, wenn R Wasserstoff bedeutet.

**8.** Verfahren nach Anspruch 7, dadurch gekennzeichnet, daß man den Polyalkylenimin enthaltenden Cellulose-Formkörper in Gegenwart von Wasser mit wenigstens einem Polyisocyanat der Formel

$$R''\{NCO)_n$$

behandelt, in der R" einen aliphatischen oder aromatischen Rest mit 2 bis 13 Kohlenstoffatomen und n eine ganze Zahl von 2 bis 4 bedeuten.

**9.** Verfahren nach Anspruch 7, dadurch gekennzeichnet, daß man den Polyalkylenimin enthaltenden Cellulose-Formkörper in Gegenwart von Wasser mit einem mit den Iminogruppen des Polyalkylenimins reagierenden Mittel aus der Gruppe mit den Formeln

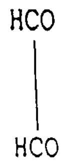 (II), 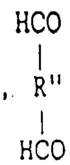 (III), 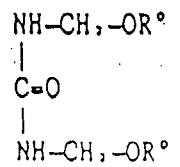 (IV), 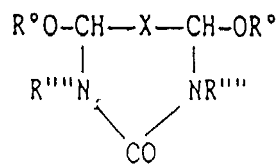 (V)

und

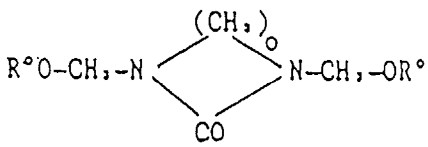 (VI)

in denen o, R"', R"" und X die in Anspruch 1 angegebene Bedeutung haben und R° Wasserstoff oder Methyl bedeutet, behandelt und durch Erhitzen auf eine Temperatur in dem Bereich von 95 bis 125 °C in Gegenwart eines Katalysators das Polyalkylenimin vernetzt.

**10.** Verfahren nach Anspruch 9, dadurch gekennzeichnet, daß man den Polyalkylenimin enthaltenden Cellulose-Formkörper auf eine Temperatur in dem Bereich von 100 bis 110 °C erhitzt.

**11.** Verfahren nach Anspruch 9 oder 10, dadurch gekennzeichnet, daß man die Vernetzung in Gegenwart von Magnesiumsalz als Katalysator durchführt.

**12.** Verfahren nach einem der Ansprüche 7 bis 11, dadurch gekennzeichnet, daß man zur Bildung der Polymerlösung

a) Cellulose bei Temperaturen zwischen 20 und 70°C und einem pH-Wert zwischen 3 und 10 mit Cellulase in einer Menge in dem Bereich von 0,1 bis 10 Masse-%, bezogen auf Cellulose, in einer wässrigen Flotte enzymatisch vorbehandelt,
b) die vorbehandelte Cellulose von der Flotte abtrennt, und
c) die abgetrennte Cellulose in eine Schmelze mit einem Molverhältnis N-Methylmorpholin-N-oxid zu Wasser in dem Bereich von 1: ≤ 1,2 bis 1: ≥ 0,8 einträgt und bis zum vollständigen Lösen schert.

**13.** Verfahren nach Anspruch 12, dadurch gekennzeichnet, daß man in Stufe c) ein durch Konzentrierung des bei der Verspinnung der Celluloselösung angefallenen Spinnbades erhaltenes Konzentrat einsetzt.

**14.** Verfahren nach Anspruch 13, dadurch gekennzeichnet, daß das Konzentrat auf wenigstens 86,7 Masser-% N-Methylmorpholin-N-oxid konzentriert wird.

**15.** Verfahren nach einem der Ansprüche 12 bis 14, dadurch gekennzeichnet, daß man die Stufe c) bei einer Temperatur in dem bereich von 72 bis 95°C durchführt.

**16.** Verfahren nach einem der Ansprüche 12 bis 15, dadurch gekennzeichnet, daß man die Cellulosesuspension während des Lösevorgangs unter Vakuum entgast.

**17.** Verfahren nach einem der Ansprüche 12 bis 16, dadurch gekennzeichnet, daß man die Vorbehandlung mit einem Cellulasegehalt in dem Bereich von 0,5 bis 3,0 Masse-% durchführt.

**18.** Verfahren nach einem der Ansprüche 12 bis 17, dadurch gekennzeichnet, daß man die Vorbehandlung bei einer Temperatur in dem Bereich von 30 bis 60°C durchführt.

**19.** Verfahren nach einem der Ansprüche 12 bis 18, dadurch gekennzeichnet. daß man die Vorbehandlung mit einem Flottenverhältnis Cellulose/Wasser in dem Bereich von 1:3 bis 1:30 durchführt.

**20.** Verfahren nach einem der Ansprüche 12 bis 19, dadurch gekennzeichnet, daß man die Vorbehandlung bei einem pH-Wert in dem Bereich von 4,5 bis 8 durchführt.

**21.** Verfahren nach einem der Ansprüche 12 bis 20, dadurch gekennzeichnet, daß man die Cellulose vor der enzymatischen Vorbehandlung unter Scherung in Wasser aufschlägt.

**22.** Verfahren nach einem der Ansprüche 12 bis 21, dadurch gekennzeichnet, daß man die in Stufe b) abgetrennte Flotte nach Ergänzung der des verbrauchten Enzyms in die Stufe a) zurückführt.

**Patentansprüche für folgenden Vertragsstaat : NL**

**1.** Formkörper, insbesondere Faser oder Folie, aus nach dem Aminoxid-Verfahren regenerierter Cellulose, dadurch gekennzeichnet, daß die Cellulose 0,02 bis 30 Masse-% eines Polyalkyleniminderivats der Formel

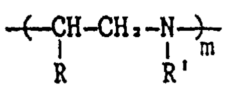 (O)

enthält, in der m eine ganze Zahl in dem Bereich von 20 bis 20 000 ist, R Wasserstoff oder Methyl und R' Wasserstoff oder eine noch an wenigstens ein Stickstoffatom eines anderen Moleküls des Polyalkyleniminderivats gebundene Gruppe der Formeln

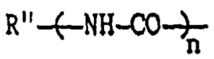 (I), 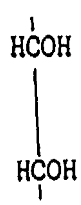 (II), 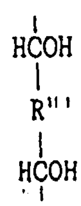 (III), 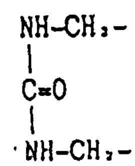 (IV),

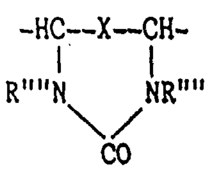 (V) oder 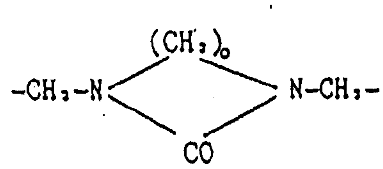 (VI)

bedeuten, in der R" eine Alkylen- oder Arylengruppe mit 2 bis 13 Kohlenstoffatomen, R"' Polyethylendiol, R"" Wasserstoff oder Alkyl und X eine Einfachbindung oder Methylen, n eine ganze Zahl von 2 bis 4 und o eine ganze Zahl ≥ 2 bedeuten.

**2.** Formkörper nach Anspruch 1, dadurch gekennzeichnet, daß die Cellulose 0,1 bis 10 Masse-% des Polyalkyleniminderivats enthält.

**3.** Formkörper nach Anspruch 1 oder 2, dadurch gekennzeichnet, daß R' die Gruppe

$$-CO-NH-(CH_2)_6-NH-CO-$$

ist.

**4.** Formkörper nach einem der Ansprüche 1 bis 3, dadurch gekennzeichnet, daß m eine ganze Zahl in dem Bereich von 200 bis 5000 ist.

**5.** Formkörper nach Anspruch 1, dadurch gekennzeichnet, daß R' die Gruppe

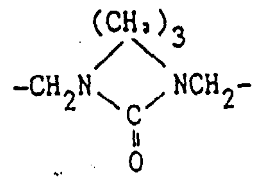

ist.

**6.** Formkörper nach Anspruch 1, dadurch gekennzeichnet, daß R' die Gruppe

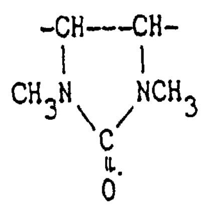

ist.

**7.** Verfahren zur Herstellung von Cellulose-Formkörpern, insbesondere Fasern, Filamenten und Folien, nach dem Trocken-Naßextrusionsverfahren durch Bilden einer Polymerlösung mit 5 bis 25 Masse-% Cellulose, 85 bis 65 Masse-% eines tertiären Aminoxids, vorzugsweise N-Methylmorpholin-N-oxid, und 8 bis 16 Masse-% eines Nichtlösungsmittels für Cellulose, vorzugsweise Wasser, Verformen dieser Polymerlösung durch Pressen der Lösung durch Formdüsen, Verziehen des gebildeten Lösungsstrahls in einem nichtausfällenden Medium zwischen dem Düsenaustritt und dem Eintritt in ein Fällbad, Ausfällen des Cellulose-Formkörpers, Nachbehandeln und Trocknen, dadurch gekennzeichnet, daß man eine Polymerlösung mit 0,02 bis 30 Masse-%, bezogen auf Cellulose, Polyalkylenimin der Formel

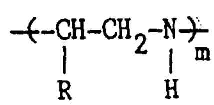

einsetzt, in der R Wasserstoff oder Methyl und m eine ganze Zahl in dem Bereich von 20 bis 20 000 bedeuten, und einen Polyalkylenimin enthaltenden Cellulose-Formkörper ausfällt.

**8.** Verfahren nach Anspruch 7, dadurch gekennzeichnet, daß man den Polyalkylenimin enthaltenden Cellulose-Formkörper in Gegenwart von Wasser mit wenigstens einem Polyisocyanat der Formel

$R''(NCO)_n$

behandelt, in der R" einen aliphatischen oder aromatischen Rest mit 2 bis 13 Kohlenstoffatomen und n eine ganze Zahl von 2 bis 4 bedeuten.

**9.** Verfahren nach Anspruch 7, dadurch gekennzeichnet, daß man den Polyalkylenimin enthaltenden Cellulose-Formkörper in Gegenwart von Wasser mit einem mit den Iminogruppen des Polyalkylenimins reagierenden Mittel aus der Gruppe mit den Formeln

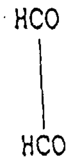 (II), 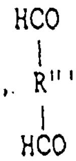 (III), 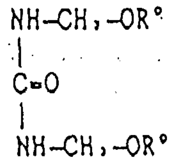 (IV), 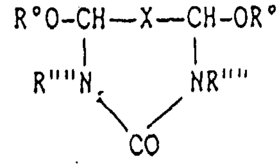 (V)

und

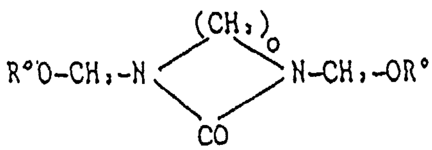 (VI)

in denen o, R''', R'''' und X die in Anspruch 1 angegebene Bedeutung haben und R° Wasserstoff oder Methyl bedeutet, behandelt und durch Erhitzen auf eine Temperatur in dem Bereich von 95 bis 125 °C in Gegenwart eines Katalysators das Polyalkylenimin vernetzt.

**10.** Verfahren nach Anspruch 9, dadurch gekennzeichnet, daß man den Polyalkylenimin enthaltenden Cellulose-Formkörper auf eine Temperatur in dem Bereich von 100 bis 110 °C erhitzt.

**11.** Verfahren nach Anspruch 9 oder 10, dadurch gekennzeichnet, daß man die Vernetzung in Gegenwart von Magnesiumsalz als Katalysator durchführt.

**12.** Verfahren nach einem der Ansprüche 7 bis 11, dadurch gekennzeichnet, daß man zur Bildung der Polymerlösung

a) Cellulose bei Temperaturen zwischen 20 und 70°C und einem pH-Wert zwischen 3 und 10 mit Cellulase in einer Menge in dem Bereich von 0,1 bis 10 Masse-%, bezogen auf Cellulose, in einer .wässrigen Flotte enzymatisch vorbehandelt,
b) die vorbehandelte Cellulose von der Flotte abtrennt, und
c) die abgetrennte Cellulose in eine Schmelze mit einem Molverhältnis N-Methylmorpholin-N-oxid zu Wasser in dem Bereich von 1: $\leq$ 1,2 bis 1: $\geq$ 0,8 einträgt und bis zum vollständigen Lösen schert.

**13.** Verfahren nach Anspruch 12, dadurch gekennzeichnet, daß man in Stufe c) ein durch Konzentrierung des bei der Verspinnung der Celluloselösung angefallenen Spinnbades erhaltenes Konzentrat einsetzt.

**14.** Verfahren nach Anspruch 13, dadurch gekennzeichnet, daß das Konzentrat auf wenigstens 86,7 Masser-% N-Methylmorpholin-N-oxid Konzentriert wird.

**15.** Verfahren nach eine der Ansprüche 12 bis 14, dadurch gekennzeichnet, daß man die Stufe c) bei einer Temperatur in dem Bereich von 72 bis 95°C durchführt.

**16.** Verfahren nach einem der Ansprüche 12 bis 15, dadurch gekennzeichnet, daß man die Cellulosesuspension während des Losevorgangs unter Vakuum entgast.

**17.** Verfahren nach einem der Ansprüche 12 bis 16, dadurch gekennzeichnet, daß man die Vorbehandlung mit eine Cellulasegehalt in dem Bereich von 0,5 bis 3,0 Masse-% durchführt.

**18.** Verfahren nach einem der Ansprüche 12 bis 17, dadurch gekennzeichnet, daß man die Vorbehandlung bei einer Temperatur in dem Bereich von 30 bis 60°C durchführt.

**19.** Verfahren nach einem der Anspriücne 12 bis 18, dadurch gekennzeichnet, daß man die Vorbehandlung mit einem Flottenverhältnis Cellulose/Wasser in dem Bereich von 1:3 bis 1:30 durchführt.

**20.** Verfahren nach einem der Ansprüche 12 bis 19, dadurch gekennzeichnet, daß man die Vorbehandlung bei einem pH-Wert in dem Bereich von 4,5 bis 8 durchführt.

**21.** Verfahren nach einem der Ansprüche 12 bis 20, dadurch gekennzeichnet, daß man die Cellulose vor der enzymatischen Vorbehandlung unter Scherung in Wasser aufschlägt.

**22.** Verfahren nach einem der Ansprüche 12 bis 21, dadurch gekennzeichnet, daß man die in Stufe b) abgetrennte Flotte nach Ergänzung der des verbrauchten Enzyms in die Stufe a) zurückführt.

## Claims

### Claims for the following Contracting States : AT, DE, ES, GB, SE

**1.** Moulded article, in particular fiber or film, of cellulose regenerated according to the amine oxide process, characterized in that the cellulose contains 0.02 to 30 % by mass of a polyalkylenimine derivative of the formula

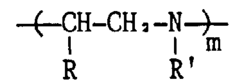

in which m is an integer in the range from 20 to 20,000, R is hydrogen or methyl, and R' is hydrogen or a group which is also linked to at least one nitrogen atom of another molecule of the polyalkylenimine derivative and has one of the formulae

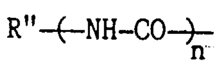 (I), 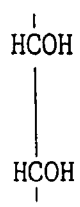 (II), 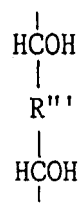 (III), 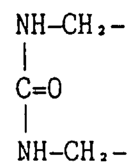 (IV),

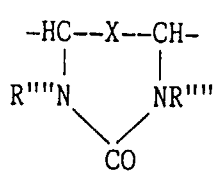 (V) or 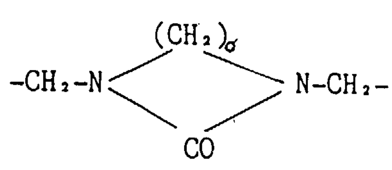 (VI)

in which R" is an alkylene or arylene group with 2 to 13 carbon atoms, R'" is polyethylenediol, R"" is hydrogen or alkyl, and X is a single bond or methylene, n is an integer from 2 to 4 and o is an integer ≥ 2; with the proviso that m is an integer in the range from 652 to 20,000 when R and R' represent hydrogen.

**2.** Moulded article according to Claim 1, characterized in that the cellulose contains 0.1 to 10 % by mass of the

polyalkylenimine derivative.

3. Moulded article according to Claim 1 or 2, characterized in that R' is the group

$$-CO-NH-(CH_2)_6NH-CO-$$

4. Moulded article according to any of the Claims 1 to 3, characterized in that m is an integer in the range from 200 to 5,000.

5. Moulded article according to Claim 1, characterized in that R' ist the group

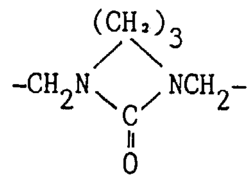

6. Moulded article according to Claim 1, characterized in that R' is the group

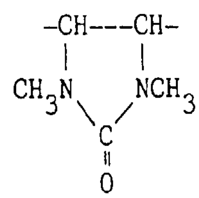

7. Process for manufacturing moulded articles of cellulose, in particular fibers, filaments and films, according to the dry/wet extrusion process, by preparing a polymer solution with 5% to 25% by mass of cellulose, 85% to 65% by mass of a tertiary amine oxide, preferably N-methylmorpholine N-oxide, and 8% to 16% by mass of a non-solvent for cellulose, preferably water, forming this polymer solution by pressing the solution through forming nozzles, drawing the formed jet of solution so obtained in a non-precipitating medium between the nozzle exit and the entry into a precipitating bath, precipitating the cellulose-based moulded article, post-treating and drying, characterized in that a polymer solution is used which contains 0.02 to 30% by mass, based on cellulose, of polyalkylenimine of the formula

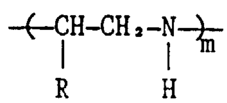

in which R is hydrogen or methyl and m is an integer in the range from 20 to 20,000, and in that a cellulose-based moulded article containing polyalkylenimine is precipitated; with the proviso that m in the formula represents an integer in the range from 652 to 20,000 when R represents hydrogen.

8. Process according to Claim 7, characterized in that the cellulose-based moulded article containing polyalkylenimine is treated in the presence of water with at least one polyisocyanate of the formula

$$R''(NOC)_n$$

in which R" is an aliphatic or aromatic residue with 2 to 13 carbon atoms and n is an integer from 2 to 4.

**9.** Process according to Claim 7, characterized in that the cellulose-based moulded article containing polyalkylenimine is treated in the presence of water with an agent reacting with the imino groups of the polyalkylenimine, taken from the group having the formulae

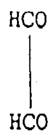 (II), 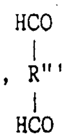 (III), 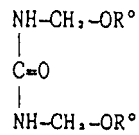 (IV), 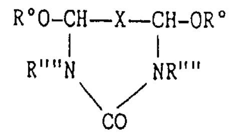 (V)

and

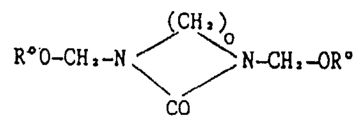 (VI)

in which o, R''', R'''' and X have the meanings cited in Claim 1 and R° is hydrogen or methyl, and the polyalkylenimine is crosslinked by heating in the presence of a catalyst to a temperature in the range of 95° to 125°C.

**10.** Process according to Claim 9, characterized in that the cellulose-based moulded article containing polyalkylenimine is heated to a temperature in the range from 100° to 110°C.

**11.** Process according to Claim 9 or 10, characterized in that the crosslinking is carried out in the presence of a magnesium salt as a catalyst.

**12.** Process according to any of the Claims 7 to 11, characterized in that in order to form the polymer solution

a) cellulose is pretreated with enzyme in an aqueous liquor at temperatures between 20° and 70°C and a pH between 3 and 10 using cellulase in an amount ranging from 0.1 to 10 % by mass, based on the cellulose,
b) the pretreated cellulose is separated from the liquor, and
c) the separated cellulose is introduced into a melt having a molar ratio of N-methylmorpholine N-oxide to water in the range from 1; ≤ 1.2 to 1; ≥ 0.8, and is sheared until it is completely dissolved.

**13.** Process according to Claim 12, characterized in that in step c) a concentrate is used which is obtained by concentrating the spinning bath that resulted from the spinning of the cellulose solution.

**14.** Process according to Claim 13, characterized in that the concentrate is concentrated to at least 86.7 % by mass of N-methylmorpholine N-oxide.

**15.** Process according to any of the Claims 12 to 14, characterized in that step c) is carried out at a temperature in the range from 72 to 95°C.

**16.** Process according to any of the Claims 12 to 15, characterized in that during the dissolution process the cellulose suspension is degassed under vacuum.

**17.** Process according to any of the Claims 12 to 16, characterized in that the pretreatment is carried out using a cellulase content in the range from 0.5 to 3.0 % by mass.

**18.** Process according to any of the Claims 12 to 17, characterized in that the pretreatment is carried out at a temperature in the range from 30 to 60°C.

**19.** Process according to any of the Claims 12 to 18, characterized in that the pretreatment is carried out with a liquor ratio of cellulose/water in the range from 1:3 to 1:30.

**20.** Process according to any of the Claims 12 to 19, characterized in that the pretreatment is carried out at a pH in

the range from 4.5 to 8.

**21.** Process according to any of the Claims 12 to 20, characterized in that before the enzyme pretreatment the cellulose is beaten in water using shearing.

**22.** Process according to any of the Claims 12 to 21, characterized in that the liquor separated in step (b), after having made up the consumed enzyme, is recycled into step (a).

**Claims for the following Contracting State : NL**

**1.** Moulded article, in particular fiber or film, of cellulose regenerated according to the amine oxide process, characterized in that the cellulose contains 0.02 to 30 % by mass of a polyalkylenimine derivative of the formula

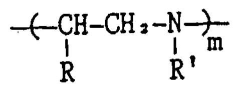

in which is an integer in the range from 20 to 20,000, R is hydrogen or methyl, and R' is hydrogen or a group which is also linked to at least one nitrogen atom of another molecule of the polyalkylenimine derivative and has one of the formulae

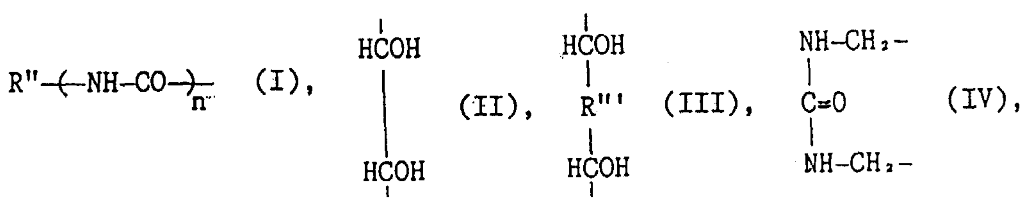

(I), (II), (III), (IV),

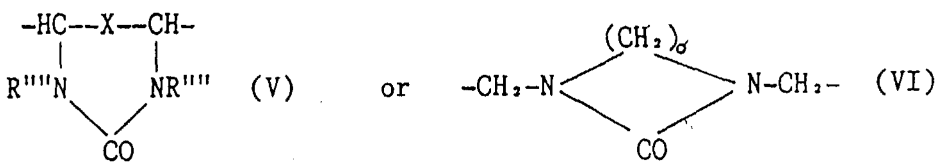

(V) or (VI)

in which R" is an alkylene or arylene group with 2 to 13 carbon atoms, R'" is polyethylenediol, R"" is hydrogen or alkyl, and X is a single bond or methylene, n is an integer from 2 to 4 and o is an integer ≥2.

**2.** Moulded article according to Claim 1, characterized in that the cellulose contains 0.1 to 10 % by mass of the polyalkylenimine derivative.

**3.** Moulded article according to Claim 1 or 2, characterized in that R' is the group

$$-CO-NH-(CH_2)_6-NH-CO-$$

**4.** Moulded article according to any of the Claims 1 to 3, characterized in that m is an integer in the range from 200 to 5,000.

**5.** Moulded article according to Claim 1, characterized in that R' ist the group

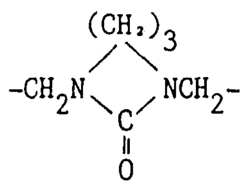

6. Moulded article according to Claim 1, characterized in that R' is the group

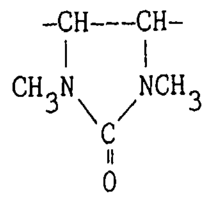

7. Process for manufacturing moulded articles of cellulose, in particular fibers, filaments and films, according to the dry/wet extrusion process, by preparing a polymer solution with 5% to 25% by mass of cellulose, 85% to 65% by mass of a tertiary amine oxide, preferably N-methylmorpholine N-oxide, and 8% to 16% by mass of a non-solvent for cellulose, preferably water, forming this polymer solution by pressing the solution through forming nozzles, drawing the formed jet of solution so obtained in a non-precipitating medium between the nozzle exit and the entry into a precipitating bath, precipitating the cellulose-based moulded article, post-treating and drying, characterized in that a polymer solution is used which contains 0.02 to 30% by mass, based on cellulose, of polyalkylenimine of the formula

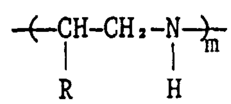

in which R is hydrogen or methyl and m is an integer in the range from 20 to 20,000, and in that a cellulose-based moulded article containing polyalkylenimine is precipitated.

8. Process according to Claim 7, characterized in that the cellulose-based moulded article containing polyalkylenimine is treated in the presence of water with at least one polyisocyanate of the formula

$$R''(NOC)_n$$

in which R" is an aliphatic or aromatic residue with 2 to 13 carbon atoms and n is an integer from 2 to 4.

9. Process according to Claim 7, characterized in that the cellulose-based moulded article containing polyalkylenimine is treated in the presence of water with an agent reacting with the imino groups of the polyalkylenimine, taken from the group having the formulae

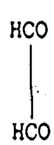 (II), 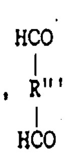 (III), 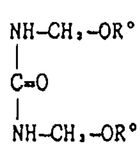 (IV), 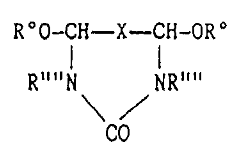 (V)

and

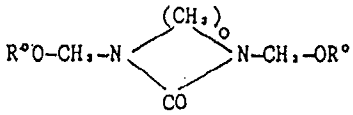 (VI)

in which o, R''', R'''' and X have the meanings cited in Claim 1 and R° is hydrogen or methyl, and the polyalkylenimine is crosslinked by heating in the presence of a catalyst to a temperature in the range of 95° to 125°C.

**10.** Process according to Claim 9, characterized in that the cellulose-based moulded article containing polyalkylenimine is heated to a temperature in the range from 100° to 110°C.

**11.** Process according to Claim 9 or 10, characterized in that the crosslinking is carried out in the presence of a magnesium salt as a catalyst.

**12.** Process according to any of the Claims 7 to 11, characterized in that in order to form the polymer solution

a) cellulose is pretreated with enzyme in an aqueous liquor at temperatures between 20° and 70°C and a pH between 3 and 10 using cellulase in an amount ranging from 0.1 to 10 % by mass, based on the cellulose,
b) the pretreated cellulose is separated from the liquor, and
c) the separated cellulose is introduced into a melt having a molar ratio of N-methylmorpholine N-oxide to water in the range from 1: ≤ 1.2 to 1: ≥ 0.8, and is sheared until it is completely dissolved.

**13.** Process according to Claim 12, characterized in that in step c) a concentrate is used which is obtained by concentrating the spinning bath that resulted from the spinning of the cellulose solution.

**14.** Process according to Claim 13, characterized in that the concentrate is concentrated to at least 86.7 % by mass of N-methylmorpholine N-oxide.

**15.** Process according to any of the Claims 12 to 14, characterized in that step c) is carried out at a temperature in the range from 72 to 95°C.

**16.** Process according to any of the Claims 12 to 15, characterized in that during the dissolution process the cellulose suspension is degassed under vacuum.

**17.** Process according to any of the Claims 12 to 16, characterized in that the pretreatment is carried out using a cellulase content in the range from 0.5 to 3.0 % by mass.

**18.** Process according to any of the Claims 12 to 17, characterized in that the pretreatment is carried out at a temperature in the range from 30 to 60°C.

**19.** Process according to any of the Claims 12 to 18, characterized in that the pretreatment is carried out with a liquor ratio of cellulose/water in the range from 1:3 to 1:30.

**20.** Process according to any of the Claims 12 to 19, characterized in that the pretreatment is carried out at a pH in the range from 4.5 to 8.

**21.** Process according to any of the Claims 12 to 20, characterized in that before the enzyme pretreatment the cellulose is beaten in water using shearing.

**22.** Process according to any of the Claims 12 to 21, characterized in that the liquor separated in step (b), after having made up the consumed enzyme, is recycled into step (a).

## Revendications

### Revendications pour les Etats contractants suivants : AT, DE, ES, GB, SE

1. Corps moulés, en particulier fibres ou feuilles, constitués de cellulose régénérée conformément au procédé faisant appel à un oxyde d'amine, caractérisés en ce que la cellulose contient, à concurrence de 0,02 à 30% en masse, un dérivé de polyalkylèneimine répondant à la formule:

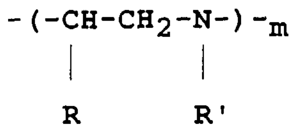
(0)

dans laquelle m représente un nombre entier dans le domaine de 20 à 20.000, R représente un atome d'hydrogène ou un groupe méthyle, et R' représente un atome d'hydrogène ou un groupe encore lié à au moins un atome d'azote d'une autre molécule du dérivé de polyalkylèneimine, répondant aux formules:

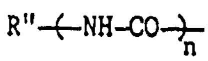 (I), 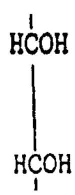 (II), 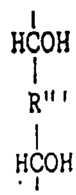 (III), 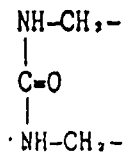 (IV),

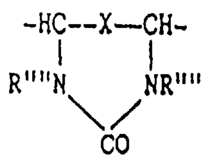 (V) 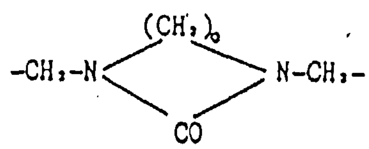 (VI)

dans lesquelles R" représente un groupe alkylène ou un groupe arylène contenant de 2 à 13 atomes de carbone, R"' représente le polyéthylènediol, R"" représente un atome d'hydrogène ou un groupe alkyle, et X représente une liaison simple ou un groupe méthyle, n représente un nombre entier de 2 à 4 et o représente un nombre entier ≥ 2, avec cette mesure que m représente un nombre entier dans le domaine de 652 à 20.000 lorsque R et R' représentent un atome d'hydrogène.

2. Corps moulés selon la revendication 1, caractérisés en ce que la cellulose contient le dérivé de polyalkylèneimine à concurrence de 0,1 à 10% en masse.

3. Corps moulés selon la revendication 1 ou 2, caractérisés en ce que R' représente le groupe

$$-CO-NH-(CH_2)_6-NH-CO-$$

4. Corps moulés selon une des revendications 1 à 3, caractérisés en ce que m représente un nombre entier dans le domaine de 200 à 5.000.

5. Corps moulés selon la revendication 1, caractérisés en ce que R' représente le groupe

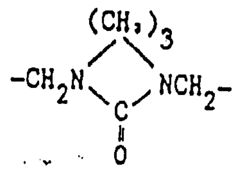

6. Corps moulés selon la revendication 1, caractérisés en ce que R' représente le groupe

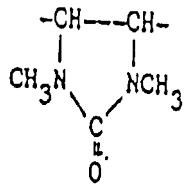

7. Procédé pour la préparation de corps moulés en cellulose, en particulier des fibres, des filaments et des feuilles, conformément au procédé d'extrusion par voie sèche-par voie humide par formation d'une solution polymère contenant de la cellulose à concurrence de 5 à 25% en masse, un oxyde d'amine tertiaire, de préférence un N-oxyde de N-méthylmorpholine à concurrence de 85 à 65% en masse, et un non-solvant pour la cellulose, de préférence de l'eau à concurrence de 8 à 16% en masse, transformation de cette solution polymère par pressage de la solution à travers des filières, étirage du faisceau en solution obtenu dans un milieu de non-précipitation entre la sortie de filière et l'entrée dans un bain de précipitation, précipitation du corps moulé en cellulose, traitement ultérieur et séchage, caractérisé en ce qu'on met en oeuvre une solution polymère contenant, à concurrence de 0,02 à 30% en masse rapportés à la cellulose, une polyalkylèneimine répondant à la formule

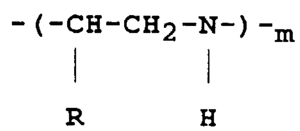

dans laquelle R représente un atome d'hydrogène ou un groupe méthyle et m représente un nombre entier dans le domaine de 20 à 20.000, et on précipite un corps moulé en cellulose contenant une polyalkylèneimine, avec cette mesure que, dans la formule, m représente un nombre entier dans le domaine de 652 à 20.000 lorsque R représente un atome d'hydrogène.

8. Procédé selon la revendication 7, caractérisé en ce qu'on traite le corps moulé en cellulose contenant une polyalkylèneimine en présence d'eau avec au moins un polyisocyanate répondant à la formule

$$R''\text{-}(\text{-}NCO)_n$$

dans laquelle R" représente un radical aliphatique ou aromatique contenant de 2 à 13 atomes de carbone et n représente un nombre entier de 2 à 4.

9. Procédé selon la revendication 7, caractérisé en ce qu'on traite le corps moulé en cellulose contenant une polyalkylèneimine en présence d'eau avec un agent réagissant avec les groupes imino de la polyalkylèneimine, choisi parmi le groupe répondant aux formules:

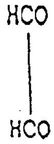 (II), 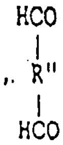 (III), 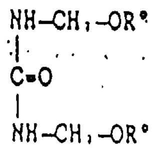 (IV), 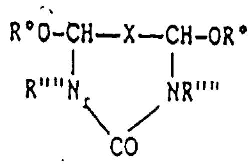 (V)

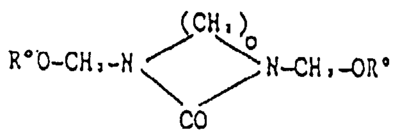 (VI)

dans lesquelles o, R''', R'''' et X ont la signification indiquée à la revendication 1 et $R^0$ représente un atome d'hydrogène ou un groupe méthyle, et on réticule la polyalkylèneimine par chauffage à une température dans le domaine de 95 à 125°C en présence d'un catalyseur.

**10.** Procédé selon la revendication 9, caractérisé en ce qu'on chauffe le corps moulé en cellulose contenant une polyalkylèneimine à une température dans le domaine de 100 à 110°C.

**11.** Procédé selon la revendication 9 ou 10, caractérisé en ce qu'on effectue la réticulation en présence d'un sel de magnésium à titre de catalyseur.

**12.** Procédé selon l'une quelconque des revendications 7 à 11, caractérisé en ce que, pour la formation de la solution polymère,

a) on soumet à un prétraitement enzymatique dans un bain aqueux, de la cellulose à des températures entre 20 et 70°C et à une valeur de pH entre 3 et 10 avec de la cellulase en une quantité dans le domaine de 0,1 à 10% en masse rapportés à la cellulose,
b) on sépare du bain la cellulose prétraitée, et
c) on introduit la cellulose séparée dans une masse fondue avec un rapport molaire du N-oxyde de N-méthylmorpholine à l'eau dans le domaine de 1:≤1,2 à 1:≥0,8 et on la soumet à un cisaillement jusqu'à dissolution complète.

**13.** Procédé selon la revendication 12, caractérisé en ce qu'on met en oeuvre, à l'étape c), un concentrat obtenu par concentration du bain de filature obtenu lors de la filature de la solution de cellulose.

**14.** Procédé selon la revendication 13, caractérisé en ce qu'on concentre le concentrat pour obtenir du N-oxyde de N-méthylmorpholine à concurrence d'au moins 86,7% en masse.

**15.** Procédé selon l'une quelconque des revendications 12 à 14, caractérisé en ce qu'on effectue l'étape c) à une température dans le domaine de 72 à 95°C.

**16.** Procédé selon l'une quelconque des revendications 12 à 15, caractérisé en ce qu'on purge sous vide la suspension de cellulose au cours du processus de dissolution.

**17.** Procédé selon l'une quelconque des revendications 12 à 16, caractérisé en ce qu'on effectue le prétraitement avec une teneur en cellulase dans le domaine de 0,5 à 3,0% en masse.

**18.** Procédé selon l'une quelconque des revendications 12 à 17, caractérisé en ce qu'on effectue le prétraitement à une température dans le domaine de 30 à 60°C.

**19.** Procédé selon l'une quelconque des revendications 12 à 18, caractérisé en ce qu'on effectue le prétraitement avec un rapport cellulose/eau dans le bain dans le domaine de 1:3 à 1:30.

**20.** Procédé selon l'une quelconque des revendications 12 à 19, caractérisé en ce qu'on effectue le prétraitement à

une valeur de pH dans le domaine de 4,5 à 8.

**21.** Procédé selon l'une quelconque des revendications 12 à 20, caractérisé en ce qu'on soumet la cellulose, avant le prétraitement enzymatique, à un cisaillement dans de l'eau.

**22.** Procédé selon l'une quelconque des revendications 12 à 21, caractérisé en ce qu'on renvoie dans l'étape a) le bain séparé à l'étape b) après consommation complète de l'enzyme.

**Revendications pour l'Etat contractant suivant : NL**

**1.** Corps moulés, en particulier fibres ou feuilles, constitués partir de cellulose régénérée conformément au procédé faisant appel à un oxyde d'amine, caractérisés en ce que la cellulose contient, à concurrence de 0,02 à 30% en masse un dérivé de polyalkylèneimine répondant à la formule:

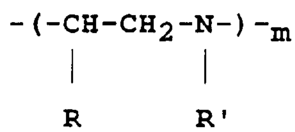

(0)

dans laquelle m représente un nombre entier dans le domaine de 20 à 20.000, R représente un atome d'hydrogène ou un groupe méthylène, et R' représente un atome d'hydrogène ou un groupe encore lié à au moins un atome d'azote d'une autre molécule du dérivé de polyalkylèneimine, répondant aux formules:

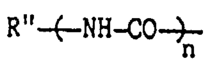 (I), 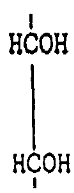 (II), 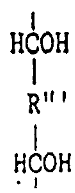 (III), 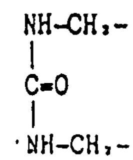 (IV),

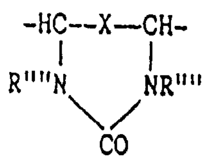 (V) 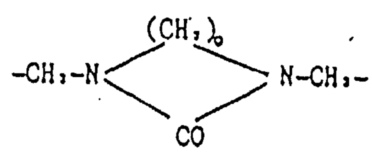 (VI)

dans lesquelles R" représente un groupe alkylène ou un groupe arylène contenant de 2 à 13 atomes de carbone, R"' représente le polyéthylènediol, R"" représente un atome d'hydrogène ou un groupe alkyle, et X représente une liaison simple ou un groupe méthyle, n représente un nombre entier de 2 à 4 et o représente un nombre entier ≥ 2.

**2.** Corps moulés selon la revendication 1, caractérisés en ce que la cellulose contient le dérivé de polyalkylèneimine à concurrence de 0,1 à 10% en masse.

**3.** Corps moulés selon la revendication 1 ou 2, caractérisés en ce que R' représente le groupe

$$-CO-NH-(CH_2)_6-NH-CO-$$

**4.** Corps moulés selon une des revendications 1 à 3, caractérisés en ce que m représente un nombre entier dans le domaine de 200 à 5.000.

**5.** Corps moulés selon la revendication 1, caractérisés en ce que R' représente le groupe

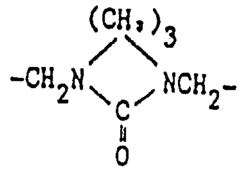

**6.** Corps moulés selon la revendication 1, caractérisés en ce que R' représente le groupe

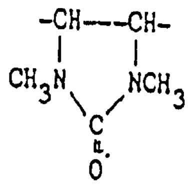

**7.** Procédé pour la préparation de corps moulés en cellulose, en particulier des fibres, des filaments et des feuilles, conformément au procédé d'extrusion par voie sèche-par voie humide par formation d'une solution polymère contenant de la cellulose à concurrence de 5 à 25% en masse, un oxyde d'amine tertiaire, de préférence un N-oxyde de N-méthylmorpholine à concurrence de 85 à 65% en masse, et un non-solvant pour la cellulose, de préférence de l'eau à concurrence de 8 à 16% en masse, transformation de cette solution polymère par pressage de la solution à travers des filières, étirage du faisceau en solution obtenu dans un milieu de non-précipitation entre la sortie de filière et l'entrée dans un bain de précipitation, précipitation du corps moulé en cellulose, traitement ultérieur et séchage, caractérisé en ce qu'on met en oeuvre une solution polymère contenant, à concurrence de 0,02 à 3% en masse rapportés à la cellulose, une polyalkylèneimine répondant à la formule

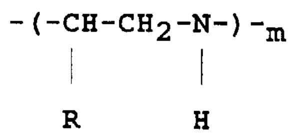

dans laquelle R représente un atome d'hydrogène ou un groupe méthyle et m représente un nombre entier dans le domaine de 20 à 20.000, et on précipite un corps moulé en cellulose contenant une polyalkylèneimine.

**8.** Procédé selon la revendication 7, caractérisé en ce qu'on traite le corps moulé en cellulose contenant une polyalkylèneimine en présence d'eau avec au moins un polyisocyanate répondant à la formule

$$R''\text{-(-NCO)}_n$$

dans laquelle R" représente un radical aliphatique ou aromatique contenant de 2 à 13 atomes de carbone et n représente un nombre entier de 2 à 4.

**9.** Procédé selon la revendication 7, caractérisé en ce qu'on traite le corps moulé en cellulose contenant une polyalkylèneimine en présence d'eau avec un agent réagissant avec les groupes imino de la polyalkylèneimine choisis parmi le groupe répondant aux formules:

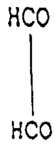 (II), 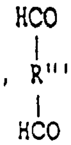 (III), 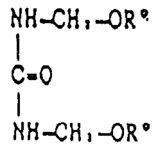 (IV), 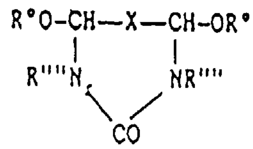 (V)

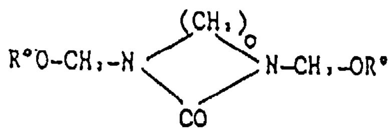 (VI)

dans lesquelles o, R''', R'''' et X ont la signification indiquée à la revendication 1 et $R^0$ représente un atome d'hydrogène ou un groupe méthyle, et on réticule la polyalkylèneimine par chauffage à une température dans le domaine de 95 à 125°C en présence d'un catalyseur.

**10.** Procédé selon la revendication 9, caractérisé en ce qu'on chauffe le corps moulé en cellulose contenant une polyalkylèneimine à une température dans le domaine de 100 à 110°C.

**11.** Procédé selon la revendication 9 ou 10, caractérisé en ce qu'on effectue la réticulation en présence d'un sel de magnésium à titre de catalyseur.

**12.** Procédé selon l'une quelconque des revendications 7 à 11, caractérisé en ce que, pour la formation de la solution polymère,

a) on soumet à un prétraitement enzymatique dans un bain aqueux, de la cellulose à des températures entre 20 et 70°C et à une valeur de pH entre 3 et 10 avec de la cellulase en une quantité dans le domaine de 0,1 à 10% en masse rapportés à la cellulose,
b) on sépare du bain la cellulose prétraitée, et
c) on introduit la cellulose séparée dans une masse fondue avec un rapport molaire du N-oxyde de N-méthylmorpholine à l'eau dans le domaine de 1:≤1,2 à 1:≥0,8 et on la soumet à un cisaillement jusqu'à dissolution complète.

**13.** Procédé selon la revendication 12, caractérisé en ce qu'on met en oeuvre, à l'étape c), un concentrat obtenu par concentration du bain de filature obtenu lors de la filature de la solution de cellulose.

**14.** Procédé selon la revendication 13, caractérisé en ce qu'on concentre le concentrat pour obtenir du N-oxyde de N-méthylmorpholine à concurrence d'au moins 86,7% en masse.

**15.** Procédé selon l'une quelconque des revendications 12 à 14, caractérisé en ce qu'on effectue l'étape c) à une température dans le domaine de 72 à 95°C.

**16.** Procédé selon l'une quelconque des revendications 12 à 15, caractérisé en ce qu'on purge sous vide la suspension de cellulose au cours du processus de dissolution.

**17.** Procédé selon l'une quelconque des revendications 12 à 16, caractérisé en ce qu'on effectue le prétraitement avec une teneur en cellulase dans le domaine de 0,5 à 3,0% en masse.

**18.** Procédé selon l'une quelconque des revendications 12 à 17, caractérisé en ce qu'on effectue le prétraitement à une température dans le domaine de 30 à 60°C.

**19.** Procédé selon l'une quelconque des revendications 12 à 18, caractérisé en ce qu'on effectue le prétraitement avec un rapport cellulose/eau dans le bain dans le domaine de 1:3 à 1:30.

**20.** Procédé selon l'une quelconque des revendications 12 à 19, caractérisé en ce qu'on effectue le prétraitement à

une valeur de pH dans le domaine de 4,5 à 8.

**21.** Procédé selon l'une quelconque des revendications 12 à 20, caractérisé en ce qu'on soumet la cellulose, avant le prétraitement enzymatique, à un cisaillement dans de l'eau.

**22.** Procédé selon l'une quelconque des revendications 12 à 21, caractérisé en ce qu'on renvoie dans l'étape a) le bain séparé à l'étape b) après consommation complète de l'enzyme.